# EUROPEAN PATENT APPLICATION

(11) **EP 1 213 880 A2**
(43) Date of publication of application: **12.06.2002**
(21) Application number: 01128484.1
(22) Date of filing: 07.12.2001
(51) Int. Cl.: H04L 12/56

(54) **In-band upstream signaling mechanism on cellbus**

(30) Priority: 07.12.2000 US 731871; 07.12.2000 US 304178 P
(71) Applicant: Alcatel USA, Inc., Plano, Texas 75075 (US)
(72) Inventor: The designation of the inventor has not yet been filed
(74) Representative: Dreiss, Fuhlendorf, Steimle & Becker

(57) **Abstract**

Roughly described, control of shared conductors of a bus for data transmission is allocated to individual devices in accordance with sequential time frames. Each time frame includes a special signaling time slot which is not used for data transmission. Each device is also assigned a respective one of the shared conductors for signaling purposes. The device which has control of the bus for data transmission is permitted to transmit onto the shared conductors at any time during the time frame except during the signaling time slots. During the signaling time slots, only the device which is associated with each given one of the shared conductors for signaling, is permitted to transmit onto that conductor. In one embodiment, devices use the signaling time slot to assert bus request signals. In another embodiment, devices use it to transmit flow control information from the devices, upstream to a master device which sends data via a downstream bus to the various devices. In general, each device or sub-device on the shared bus can be assigned a particular shared conductor *and* a particular signaling time slot. More than one device is assigned to the same conductor, but they are differentiated by being assigned different time slots. Similarly, more than one device is assigned to a given signaling time slot, but they are differentiated by being assigned different conductors.

## Description

### BACKGROUND

### 1. Field of the Invention

The invention relates to transmission of data on a shared bus, and more particularly, to a mechanism for transmitting control signals on such a bus.

### 2. Description of Related Art

Many kinds of systems are designed in such a way that several devices communicate with each other via a common bus. Often these systems are designed to be expandable, by adding additional devices at a later time, which also need to communicate via the same bus. Atypical one of such systems is an access multiplexer, in which the bus comprises a number of electrical conductors on a backplane, and the various devices are disposed on individual "line cards" which can be removably inserted into card slots on the backplane. A typical access multiplexer also includes a controller card which performs multiplexing and demultiplexing of the data being transmitted from or to the line cards. That is, line cards transmit data via the backplane bus toward the multiplexer card, which multiplexes the data with other data coming from other line cards, and forwards it in a multiplexed stream toward upstream components in a network. Similarly, the multiplexer receives downstream data from the upstream components, which it then demultiplexes and routes out to the correct line card by transmitting the data further downstream via the backplane bus toward the line cards.

When several devices share a bus, some scheme typically is required to ensure that no more than one of them tries to transmit on the bus at the same time. Many techniques for ensuring this are available in the prior art. As one example, time on the bus is divided into sequential time frames, which are in turn grouped into sequential superframes. Each device knows that it has control of the bus, and therefore can transmit onto the bus, during a particular, pre-defined, time frame within each superframe. This technique prevents two devices from attempting to transmit onto the same bus at the same time because no device is permitted to transmit onto the bus during frames in the superframe which are not preassigned to that device. In another technique, a token is passed among all the devices on the bus, and only the device which has the token at any given time is permitted to transmit onto the bus. When the device finishes transmitting, it passes the token to the next device. This technique, too, can avoid collisions. In yet another technique, devices transmit onto the shared bus whenever they are ready, but also read back the data on the bus to determine whether a collision occurred. If it did, the device waits some amount of time and attempts to retransmit. This technique does not avoid collisions, but rather accommodates them.

Yet another technique, used on many kinds of shared buses, involves the use of a bus arbiter. The bus arbiter is typically separate from any of the devices on the bus, and may be located, for example, either on the motherboard which supports the backplane traces, or on a master or controller card which is inserted into one of the backplane card slots. When a given device desires control of the bus in order to transmit data, it asserts a bus request toward the arbiter. The arbiter arbitrates among all the bus requests being made at any given time, and using some predetermined algorithm, issues a bus grant signal to one of the requesting devices. When a device receives a bus grant signal, that device takes control of the bus and can transmit its data. Collisions are avoided because no device is permitted to transmit data onto the bus unless it has received a bus grant signal from the arbiter.

Bus access schemes which incorporate an arbitration mechanism can provide optimal usage of the available bus bandwidth because time on the bus need not be allocated to devices which do not currently have data to transmit. Instead, that time can be more advantageously allocated, by the arbiter, to a different device which, even though it already had control of the bus relatively recently, now has more data ready to send. In addition, bus arbitration mechanisms can implement prioritization algorithms, whereby certain devices or certain kinds of data can be given higher priority in the arbitration algorithm than other devices or kinds of data.

In most implementations of bus arbitration mechanisms, the request and grant signals are carried on conductors different from those that carry data. Sometimes, however, extra conductors are not available for this purpose. Instead, all of the available conductors on the bus or backplane are required for data transmission. This might be the case, for example, where physical size limitations on a PC board or backplane physically limit the number of electrical traces which can be safely carried, or where the devices or the control unit are integrated onto an integrated circuit chip for which the number of package pins is limited. In these situations, extra conductors may not be available to carry bus arbitration request and grant signals. One might instead consider designing the system so that devices make their bus requests as part of the ordinary bus data stream. Such an implementation can be thought of as using "in-band" signaling. However, devices often need to make their bus requests at times when they do not currently have control of the bus. If a device does not have control of the bus, then it typically is not permitted to transmit onto the bus for fear of causing a collision with the device which does have control of the bus. Thus, an arbitration mechanism in which bus requests are made as part of the data stream might not permit devices to request control of the bus unless they already have control of the bus. Other mechanisms may exist in the prior art for overcoming that result, but very likely they would not utilize the available bus bandwidth as optimally as would implementations incorporating separate bus requests and grant lines.

There is a substantial need, therefore, for a bus arbitration mechanism in which in-band signaling is used for bus request signaling, yet which allows devices to assert their bus requests whenever they have data ready to send, as in the case with out-of-band signaling implementations.

The problem of in-band signaling by devices that may not control the bus at any given time, occurs for many different kinds of control signals that devices may need to transmit. In general, the issue arises where devices sharing a bus need to assert control signals on short notice, often before the device regains control of the bus, and where separate signaling lines are not available for asserting such signals. Another example of such a control signal is a "flow control" signal, also sometimes called a "backpressure" signal or a "not ready" signal. In a system in which a device can receive data via the bus as well as transmit data onto the bus (on the same or different conductors of the bus), the device may not be able to process the data that it receives via the bus at the same rate at which the data arrives. In many systems, the device handles this problem by asserting a backpressure signal when it has reached, or is about to reach, its data handling capacity. When the device has processed the data it previously received, and can now accept additional data, it deasserts the backpressure signal so that the source of the data knows that it can send.

Again, in order to achieve optimal usage of the data processing capacity of the device, it is desirable that the device be able to assert backpressure at the latest possible time before its capacity is exceeded. This is feasible in systems which include a separate backpressure signal line, but systems that lack such a signal line may require the device to assert its backpressure signal only while it has control of the bus for data transmission. In such a system the device may have to assert backpressure long before its data handling capacity is reached, merely as a precaution to ensure that its data handling capacity is not reached before the next time the device has control of the bus. As in the bus arbitration example set forth above, therefore, it would be highly desirable to have an in-band signaling mechanism which allows devices to assert their signals whenever they have data ready to send, without having to wait until the next time they have control of the bus for data transmission. This need is even more acute where more than one device shares a single card slot.

### SUMMARY OF THE INVENTION

According to the invention, roughly described, control of shared conductors of a bus for data transmission is allocated to individual devices in accordance with sequential time frames. Each time frame, however, includes a special signaling time slot which is not used for data transmission. Each device is also assigned a single one of the shared conductors (or a distinct subset of the shared conductors) for signaling purposes. The device which has control of the bus for data transmission is permitted to transmit onto the shared conductors at any time during the time frame except during the signaling time slots. During the signaling time slots, only the device which is associated with each given one of the shared conductors for signaling, is permitted to transmit onto the given conductor.

In an embodiment, a backplane has a shared bus which is eight bits wide and is shared among eight devices. Each device is assigned one of the eight shared conductors. Each device, when it has control of the bus, can transmit onto the bus at all times except during the signaling time slot. During the signaling time slot, only the device that is associated with the first backplane conductor is permitted to drive that backplane conductor, and only the device which is associated with the second backplane conductor is permitted to drive the second backplane conductor, and so on through the eighth device driving the eighth conductor. These devices can drive their respective assigned conductors, during the signaling time slot occurring during any or all frames, whether or not they have control of the bus for the current time frame.

A system can be designed to utilize this technique for any signaling purposes required. In one embodiment, devices utilize the signaling time slot to assert bus request signals. Ifa device desires control of the bus for data transmission, it asserts its bus request on its assigned conductor, during the next-occurring signaling time slot, even if the device does not have control of the bus for data transmission during that time frame. The bus grant signal from the arbiter can be returned to the requesting device by any desired mechanism, such as by including it in a header portion of data cells being broadcast on a separate downstream cellbus.

In another embodiment, the technique is used to transmit backpressure information from the devices, upstream to a master device which sends data via a downstream cellbus to the various devices. When a device has reached or nearly reached its capacity to accept additional data from the data source, in the next signaling time slot, the device asserts backpressure on the conductor(s) assigned to the device. The device continues to assert backpressure on that conductor during each time frame thereafter, whether or not the device has control of the bus for data transmission, until it has sufficiently processed its pending data and is ready to accept new data. The source of the data tests the appropriate conductor for backpressure information during the signaling time slot, in order to determine whether or not it should transmit new information to the device.

In the above embodiments, the device which is asserting the control signal can be identified by the conductor or conductors on which the signal was asserted. Since each device is assigned a different distinct subset ofthe shared conductors for signaling purposes, there is no possibility of contention among different devices during the signaling time slot. A different way to identify the source of a control signal and to avoid contention during control signaling, is to include two or more signaling time slots in each time frame. Each device is assigned a different signaling time slot for asserting its control signal onto the bus, which it may do within any time frame even if it does not control the bus for data transmission during that time frame. The device which does control the bus for data transmission during the time frame is required to refrain from driving the bus during all of the signaling time slots.

The above two signaling methods can also be combined by assigning a shared conductor *and* a particular signaling time slot, to each device. More than one device is assigned to the same conductor, but are differentiated by being assigned different time slots. Similarly, more than one device is assigned to a given signaling time slot, but are differentiated by being assigned different conductors. In such an embodiment, during each given one of the signaling time slots, only the device which is associated with the given signaling time slot and with the given one of the conductors is permitted to transmit onto the given conductor. Contention is thereby avoided, and the source of the control signal can be distinguished. Moreover, devices do not have to wait until they have control of the bus for data transmission in order to assert these control signals; rather, they can assert them immediately in the next time frame, whether or not they have control of the bus during that time frame, and thereby minimize control signal latency.

### BRIEF DESCRIPTION OF THE DRAWINGS

The invention will be described with respect to particular embodiments thereof and reference will be made to the drawings, in which:
Fig. 1 is a block diagram of an access network system incorporating the invention.
Fig. 2 is a block diagram of a BFB incorporated into a Litespan terminal of Fig. 1.
Fig. 3 is a block diagram of a BRX in Fig. 1.
Figs. 4 and 13 are block diagrams of one of a BMU in Fig. 3.
Fig. 5 illustrates the downstream cellbus topology in the BRX of Fig. 1.
Fig. 6 illustrates the upstream cellbus topology in the BRX of Fig. 1.
Fig. 7 illustrates the cellbus frame format in the BRX of Fig. 1.
Fig. 8 illustrates the downstream Cellbus data format in the BRX of Fig. 1 and its relation to the standard ATM cell format.
Fig. 9 illustrates the upstream Cellbus data format in the BRX of Fig. 1 and its relation to the standard ATM cell format.
Fig. 10 illustrates the Cellbus functional timing.
Fig. 11 illustrates upstream request/grant arbitration in the BRX of Fig. 1.
Fig. 12 illustrates detailed input timing and output switching characteristics for the cellbus in the BRX of Fig. 1.
Fig. 14 is a block diagram detail of the QUIC Circuits in Fig. 13.
Fig. 15 is a block diagram detail of the QUIC FPGA in Fig. 14.
Fig. 16 is a block diagram detail of the Cellbus Interface in the BRX of Fig. 1

### DETAILED DESCRIPTION

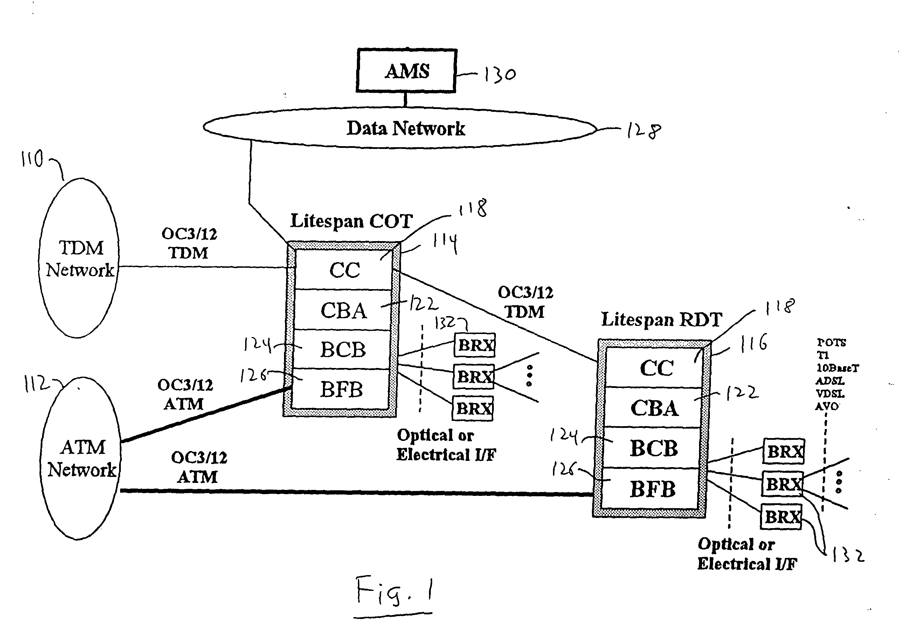

Fig. 1 is a block diagram of an access network system incorporating the invention. The system is in large part a multiplexer, which interfaces on a downstream side with subscribers, and on the upstream side with the Time Domain Multiplexed (TDM) public switched telephone network 110, or an Asynchronous Transfer Mode (ATM) network 112, or both. The system, which is known generally as a Litespan system, includes a Central Office Terminal (COT) 114, optionally connected via an OC3 or OC12 SONET link to one or more Remote Digital Terminals (RDT's) 116. Each Litespan terminal includes a Common Control (CC) shelf 118, and one or more distribution banks. Several different kinds of distribution banks can be used in a Litespan terminal. These include Channel Bank (CBA) 122, a Broadband Channel Bank (BCB) 124, and a Broadband Fiber Bank (BFB) 126. A single Litespan terminal can include more than one of these kinds of distribution banks. The Common Control 118 in the Litespan COT 114, and indirectly the Common Control 118 in the remote terminal(s) 116, are connected via a data network 128 to an Access Management System (AMS) 130.

Subtending from individual ones of the distribution banks 122, 124 or 126 in the terminals 114 and 116, are one or more Broadband Remote Transcievers (BRX's) 132. A BRX 132 can be connected to a distribution bank either via an optical or an electrical interface. If the BRX 132 subtends from a CBA 122 or a BCB 124, then an electrical interface such as HDSL is used. If the BRX 132 subtends from a BFB 126, then an optical (SONET) interface is used. The BRX 132 is described in more detail hereinafter, but generally, it includes a backplane having a number of slots in it for receiving cards. One or two of the cards inserted into the backplane must be a Broadband Multiplex Unit (BMU), and 1-8 of the remaining slots contain Line Units (LUs), also called line cards. The BMU interfaces on the upstream (network) side of the BRX 132 to the distribution bank in a Litespan terminal, and the Line Units interface on the downstream (subscriber) side of the BRX 132 with subscriber connections. The BRX supports a number of different kinds of subscriber connections, including narrow band services such as POTS, ISDN and T1; and broadband services such as ADSL, VDSL, AVO and 10BaseT.

The BRX 132 is not a self-standing unit. Rather, the Litespan terminal to which it subtends provides management, control, and switching functions. In that respect the BRX could be viewed as a remote channel bank with narrowband (NB) and broadband (BB) capabilities. From a technology point of view, the BRX is a broadband unit that supports NB services.

The BRX connects to a Litespan Terminal in the Central Office (COT) or to a remote Litespan terminal (RDT) over optical or electrical interfaces, as shown in Fig.1. Voice, video and data traffic is transported between the BRX and the Litespan terminal. Standard ATM cell payload is used, at the datalink layer, between the BRX and the distribution bank for TDM as well as ATM traffic. TDM traffic is carried within the ATM payload using an ATM adaption layer referred to herein as AAL-D, which for the purposes of the present invention, can be thought of as being similar to well known standard ATM adaption layers AAL-0 and AAL-1. For the purposes of the present description, it does not matter whether the BRX 132 is connected to a CBA, BCB, BFB or another kind of distribution bank in the Litespan terminal. For purposes of the present description, therefore, it will be assumed that the BRX 132 interfaces optically with a BFB 126 unless otherwise stated. In this configuration, an OC3 optical interface is used.

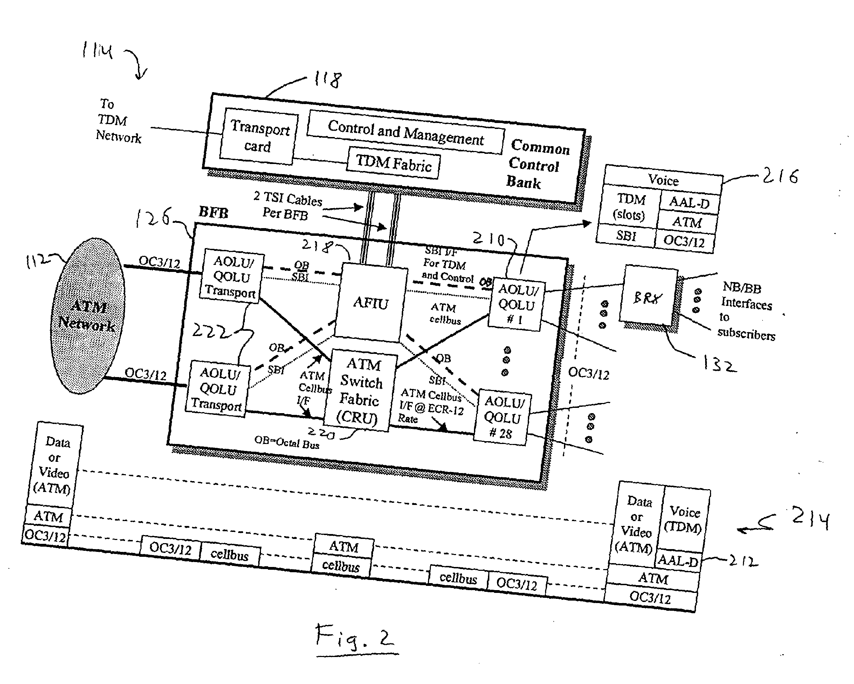

A block diagram of the BFB 126 as incorporated into a Litespan terminal 114 is illustrated in Fig. 2. Physically, the BRX 132 connects to an OC3 port on an AOLU/QOLU card 210 in the BFB 126. In the upstream direction, the following takes place:
- The BRX 132 sends ATM cells containing the Broadband ATM traffic and TDM traffic packaged in special ATM cells that are called TDM cells. This function is referred to as the AAL-D function and is indicated by the AAL-D sub-layer 212 in the protocol stack 214 in Fig. 2.
   ○ For voice processing,
      - The AOLU/QOLU 20, on the receiving end of the BFB 126, recognizes the TDM ATM cells (based on a special pattern in the ATM cell header), terminates the AAL-D sub-layer (which implies extracting the TDM data), and maps the TDM data over the an Octal Bus (OB) as TDM slots on an internal Subscriber Bus Interface (SBI).
      - An ATM Fiber Interface Unit (AFIU) 218 combines the Octalbuses as well as the SBI of the BRX's, i.e. TDM and control traffic, from all cards and sends them over Time Slot Interchange (TSI) cables to the CC 118 for processing. The protocol stack 218 for the voice is shown on the upper-right corner of the figure.
   ○ For data/video processing,
      - The AOLU/QOLU 210 terminates the OC3/12 physical layer from BRX 132 and passes the ATM cells to a different physical layer, which is the cellbus on the backplane of BFB 126.
- A Cell Routing Unit (CRU) 220 terminates the ATM layer, which includes cell buffering, cell header translation, and cell switching functions.
- The CRU 220 sends the ATM cells to the transport cards 222, which send the data to the ATM network 112 over OC3/12 optical interfaces.

In the downstream the reverse operation takes place.

### BRX Hardware Architecture

U.S. Patent No. 6,091,729, incorporated by reference herein, describes much ofthe operation of the ATM cellbus in the BFB 126. Much of that information is the same as for the cellbus in the BRX 132, and therefore will not be repeated here. To the extent there is any contradiction between the information set forth herein regarding the cellbus in the BRX 132 and that set forth in the incorporated patent, the information set forth herein.

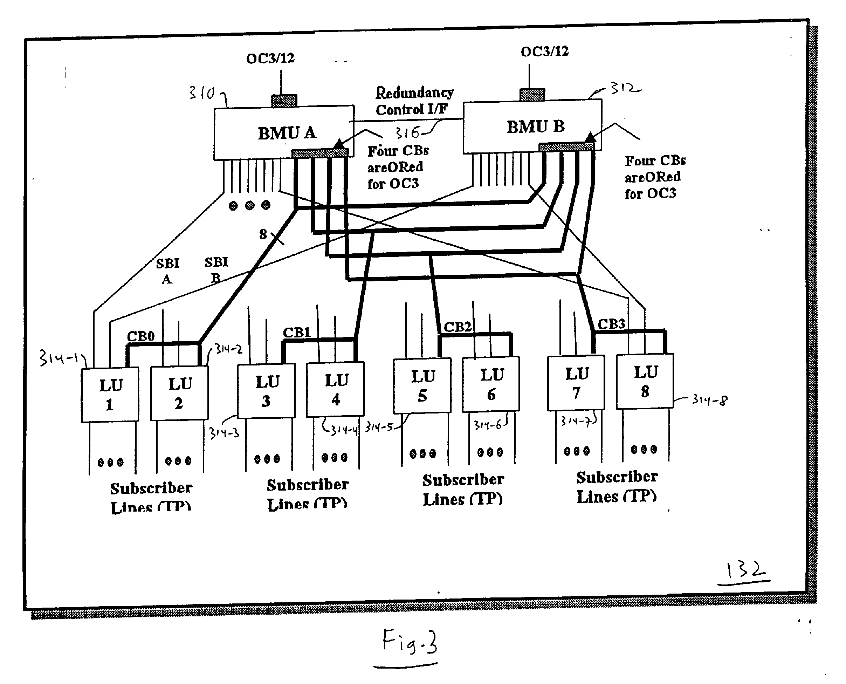

Fig. 3 is a block diagram of BRX 132. In addition to the power supply, backplane, and a fan, the BRX 132 provides eleven slots that can house the following three board types:
- BMU: the BRX controller (2 BMU's per BRX if desired for facility protection)
- LU: the service line unit (POTS, Ethernet line unit (ELU), VLU, ADLU, AVO, HDLU)
- MTRG: maintenance and ring generation line unit.

Fig. 3 illustrates a BRX 132 having a BMU A 310, a BMU B 312, each of which interface via a respective OC3 or OC12 SONET link to the BFB 126 (not shown in Fig. 3). The BRX 132 in Fig.3 is also shown fully populated with eight line units 314-1, 314-2, ... 314-8 (collectively 314). The interconnection between these boards is carried out mainly over two types of buses: a Subscriber Bus Interface (SBI), which is a point-to-point 1-bit bus between an LU 314 and each BMU 310, 312 for carrying TDM traffic and data-link messages (including provisioning messages for the LU's) from the Litespan common control 118; and a Cellbus (CB), which is an 8-bit bus shared by both BMU's 310, 312. Only the active BMU uses the cellbus. The cellbus carries ATM traffic to the line units 314. There are four CB's in the BRX 312, each shared by two line units 314. All ofthe SBI's and CB's illustrated in Fig. 3 are carried on a single backplane (not shown) in Fig. 3.

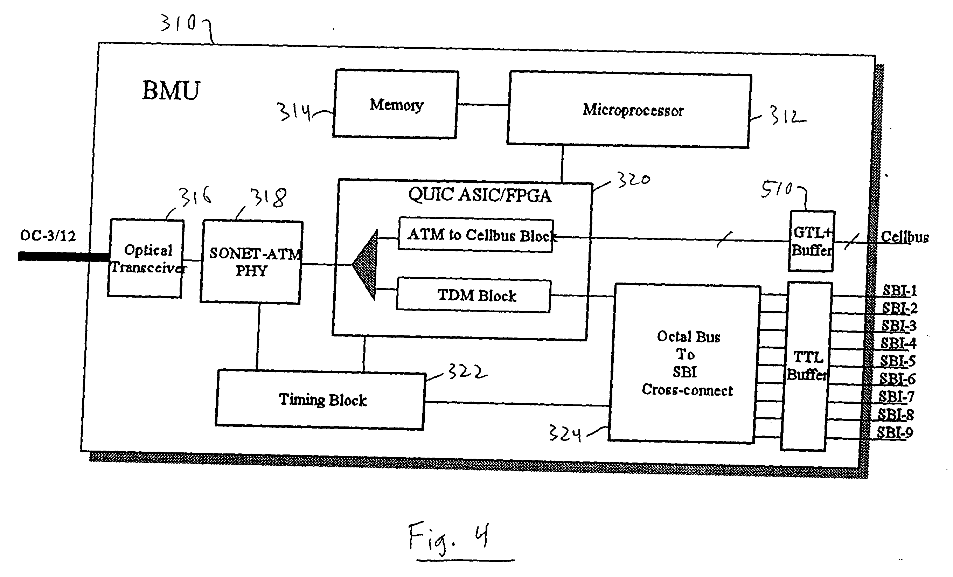

Fig. 4 is a block diagram of one of the BMU's 310. The other BMU 312 is identical. The BMU 310 is the BRX 132 controller board. In general, it is responsible for communicating with the Litespan terminal 114 over an OC3 interface (for optical feed) or over HDLU interface (for electrical feed) to acquire provisioning and operational information. The BMU needs to be configured to use either of these two network feed links.

Toward the LU's 314 the BMU 310 supports point-to-point serial links over the SBI bus with every LU in the unit. The BMU 310 multiplexes traffic received from subscribers and forwards it to the Litespan terminal 114. The BMU 310 also supports the cellbus for ATM-based data traffic.

The BMU 310 has the following components:
- Microprocessor 312
- Memory (SRAM and Flash) 314
- Optical Transceiver 316
- SONET-to-ATM framer 318
- QUIC ASIC/FPGA 320
- Timing block 322
- TDM cross-connect block 324

The BMU 310 supports, among other things, AAL-5 and Early Packet Discard (EPD), buffering for Rate Adaptive Asymmetric Digital Subscriber Line (RADSL), and ATM flow control with the BFB 126 for RADSL.

The BMU 310 supports RADSL, which therefore requires it to support an ATM backpressure mechanism to inform the Litespan 114 ATM fabric 220 to reduce the downstream data rate when the ADSL physical layer data rate to a subscriber drops down. In order to accomplish this, a cellbus frame transported on the BRX 132 cellbuses contain flow control bytes as described hereinafter. The line units 314 (Fig. 3) use these bytes to inform the BMU 310 to throttle downstream cellbus traffic. This usually happens when the line unit 314 is in a training mode and therefore cannot then accept new downstream ATM cells.

The steps of RADSL can be summarized as follows:
- LU *i* detects POTS is off-hook on one of the LCT's ports
- While LU *i* triggers retraining to change the Discrete Multi-Tone (DMT) parameters on the subscriber ADSL port and to cut down signal power on that port, the LU sets the corresponding bit of flow control byte *i* in cells transmitted upstream toward BMU 310.
- The BMU will either:
   - Route the downstream cells destined to that port to a RADSL buffer in the BMU 310.
   - Or, if no RADSL buffer is available in the BMU 310, send a message to the CRU 220 (Fig. 2) to stop sending cells to that port.

The first solution requires a large buffer size, since it serves multiple subscribers. The second solution requires an appropriate messaging scheme for this purpose and a larger buffer in the CRU 220, enough to handle many BRX's 132 with the same situation. RADSL messaging is performed end-to-end; i.e. the messages have to find their way to the source of the downstream cells. This scheme can be implemented using ABR class of service.

Apart from the BMU 310 or CRU 220 buffering, the LU 314 can have the buffer on board with buffering requirement indicated above.

The BRX 132 supports facility protection, which could be optically or electrically. The protection is achieved by redundant BMU's, i.e. two BMU's (BMU-A, the active, and BMU-B, the standby) providing redundant control and optical interface with a Litespan terminal 114, where,
• Every LU 314 has two serial point-to-point SBI buses (with BMU-A and BMU-B respectively).
• One BMU is in active state while the other is in standby state.
• A redundancy control interface link 316 (Fig. 3) allows the two BMUs to communicate.
• On the downstream direction, the two BMU's receive the same SONET (or HDSL if electrically fed) signal from the two BFB line units to which they are connected.

Since the BRX 132 requires a Litespan to connect to the ATM/TDM network, the connection is point to point via an OC-3/12 link. Therefore, the facility protection is linear. In this case, There two ways to realize the protection, 1+1 and 1:1. The BMU, however, is designed to operate in a simplex mode; i.e. single BMU model. The details of redundancy control and failover are not important for an understanding of the invention.

The cellbus is a full-duplex byte-wide up and byte-wide down, broadband data path between the BMU's 310 and the line units 314 interface over the backplane. As used herein, a "bus" can include one or more "sub-buses", or bus portions, each of which can also be considered to be a "bus." Thus, while the full duplex cellbus is considered herein to be a "bus," the upstream portion is also considered to be a bus, as is the downstream portion.

The BRX cellbus interfaces the BMU 310 to a multiple bus slaves over the cellbus at Effective Cell Rate (ECR) of either OC3 (ECR-3), OC6 (ECR-6) OC12 (ECR-12), depending on the cellbus clock of 25MHz, 50MHz, and 100MHz respectively. The Cellbus slaves are the line units 314 such as VLUs, ADLUs, ELUs. Each ATM cell is appended with a routing tag to create a 68 byte Protocol Data Unit (PDU) as described hereinafter.

Impedance controlled GTL+ interface technology is utilized between assemblies across the backplane. Downstream transmission is broadcast (Point-to-Multipoint) whereas the upstream is polling (Multipoint-to-Point).

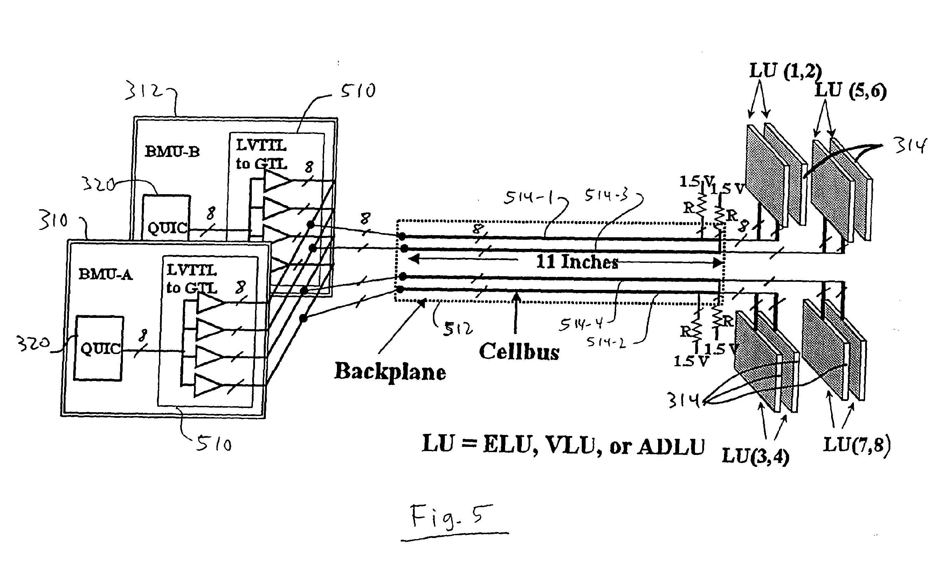

Fig. 5 illustrates the downstream cellbus topology. On BMU-A 310, an 8 bit output of QUIC 320 is connected to inputs of four 8-bit wide LVTTL-to-GTL buffers 510, producing four 8-bit GTL+ outputs. Similarly, the QUIC 320 onBMU-B 312 produces an 8-bit output, which is connected to the inputs of four 8-bit wide LVTTL-to-GTL buffers 510 on the BMU-B. The 8 output bits of each group of four GTL drivers on BMU-A 310 are connected together with the 8 output bits of the corresponding GTL driver on BMU-B 312, and onto a corresponding set of 8 downstream conductors on the backplane 512. The four 8-conductor groups on the downstream portion of the cellbus are designated in Fig. 5 as 514-1, 514-2, 514-3 and 514-4 (individually 514). All such conductors are pulled-up with a resistor to a 1.5-volt supply. Line units 1 and 2 are inserted into backplane slots which connect to the conductor group 514-1 and not to the conductor groups 514-2, 514-3 and 514-4. Similarly, line units 3 and 4 are inserted into slots which connect only to conductor group 514-2; line units 5 and 6 connect only to conductor group 514-3, and line units 7 and 8 are inserted into backplane slots which connect only to conductor group 514-4.

As can be seen, the downstream cellbus topology is a broadcast topology, in which identical 8-bit bytes are broadcast by whichever BMU 310 or 312 is active, onto all four 8-bit conductor groupings of the downstream cellbus. As described further hereinafter, the downstream data is organized into cells, each of which includes addressing information which the line units 314 use to determine whether the cell is destined for that particular line unit.

Other embodiments for the downstream cellbus will be apparent. For example, in one alternative embodiment, each of the four downstream conductor groupings is partitioned into two 4-bit buses, bus A and bus B. All of the bus-A's are used by BMU-A 310 and all of the bus-B's are used by BMU-B. To achieve the same effective data rate compared to the full broadcast topology illustrated in Fig. 5, the bus would run at double the speed. In another embodiment, all four downstream conductor groupings are driven separately, by separate QIC 320 output bytes, thereby providing fully independent downstream datastreams to each of the four pairs of line unit slots. In yet another embodiment, the backplane includes eight conductor groupings, each driven separately and independently, and each connected to only one of the line unit slots.

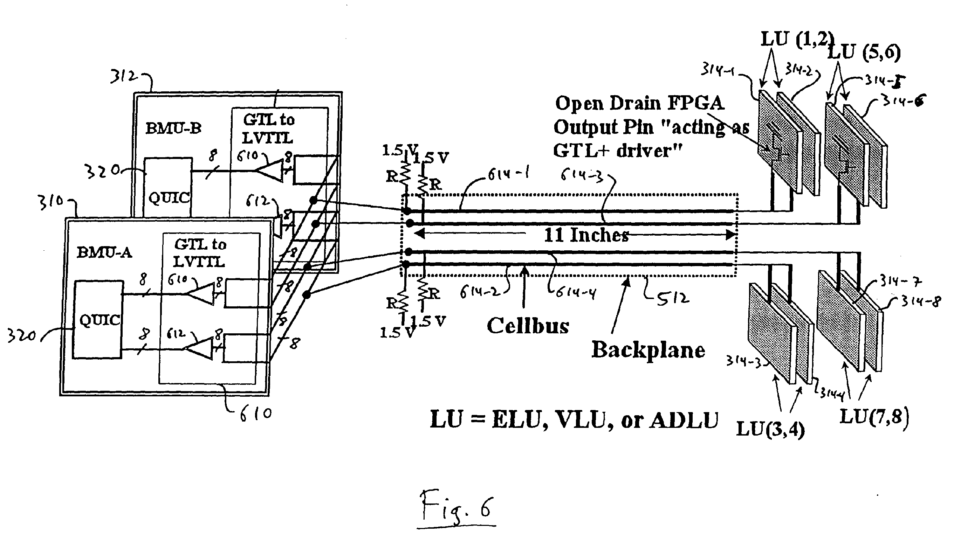

Fig. 6 illustrates the upstream cellbus topology. As with the downstream topology, the upstream topology includes four groups of eight conductors each, 614-1, 614-2, 614-3 and 614-4 (individually 614) on the backplane 512. All conductors are pulled-up with a resistor to a 1.5 volt supply. Each of the upstream conductor groupings 614 connect to two backplane slots for line units 314, which share the same 8 conductors through the use of open drain outputs acting as GTL+ drivers. A line unit which is not "transmitting" onto the backplane at a given time, therefore exhibits a high impedance to the backplane conductors and thereby permits the other line unit to transmit onto the same conductors without collision. A device or sub-device is considered to "transmit" onto the backplane even if the information transmitted must pass through other processing logic before physically reaching the backplane. For example, if a first port of quad-port line card asserts a signal toward multiplexing logic on the card, and in response to which the multiplexing logic asserts a signal onto the backplane, both the card itself as well as the first port are considered herein to be "transmitting" onto the backplane.

Upstream conductor groupings 614-1 and 614-3 are further connected together on both BMU-A 310 and BMU-B 312 and provided to an 8-bit input of respective GTL to LVTTL converters 610. Similarly, upstream cellbus groupings 614-2 and 614-4 are connected together on each of the BMU's 310 and 312 and provided as 8-bit inputs to respective GTL to LVTTL converters 612. The 8-bit outputs of each of the converters 610 and 612 on BMU-A are provided to respective 8-bit inputs of QUIC 320, and similarly, the two 8-bit outputs from converters 610 and 612 onBMU 312 are provided to respective 8-bit inputs of QUIC 320 onBMU 312. Inside the QUIC's 320, the two 8-bit inputs are oared together to provide a single 8-bit input from the entire upstream cellbus.

It can be seen that the 8 line units 314 effectively share a single 8-bit wide data path for upstream transmission in the BRX 132. The upstream cellbus of Fig. 6 would therefore suffer from the deficiencies described in the background section above were it not for the signaling techniques described herein.

Data is transmitted in both directions on the cellbus in cellbus data frames. Cellbus data frames are synchronized to a centrally generated master cell frame sync pulse that is distributed to the line units 314. A master Cellbus clock is generated on the active BMU 310 or 312 and distributed to the line units 314 via the backplane 512 at GTL levels.

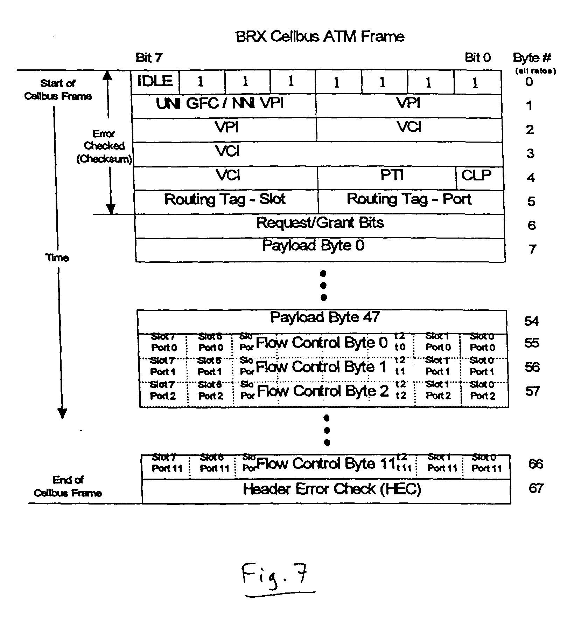

The downstream and upstream Cellbus sync signals occur every 68 cell clock cycles and are of fixed duration. The byte aligned with the rising edge of the Cellbus sync is the downstream Cellbus header. The following data is transported over the Cellbus in the ATM mode:
- Cellbus header byte
- ATM header - 4 bytes (excluding HEC)
- Routing tag byte - 4 bits for slot and 4 bits for port
- Request/Grant byte
- ATM payload - 48 bytes
- Flow Control - 12 bytes
- Error check byte - HEC
The cellbus frame format is illustrated in Fig. 7. Most of the fields are the same as in the well known ATM cell format, which is described in ATM form, "ATM user-network interface specification," version 4.0 (September, 1994), incorporated herein by reference. Also incorporated herein by reference is ATM Forum, "ATM User-Network Interface Signalling Specification," Version 4.0 (UNI 4.0)", af-sig-0061.000 (June 1996). If any differences are pertinent to an understanding ofthe invention, they are described herein. The two portions of the cell format of Fig. 7 which are most pertinent to the present discussion are byte 6 (request/grant bits), and bytes 55-66 (the flow control bytes 0-11).

As previously explained, flow control is a mechanism whereby a line unit 314 applies backpressure on the active BMU 310 or 312 to cause the BMU to stop sending further downstream cells to one of the ports on the line unit 314 that is not ready to accept traffic. The control signal is embedded in the upstream cellbus trailer bytes 55-66. Flow control bytes occupy twelve time slots on the cellbus in the upstream cellbus frame. Each bit position is assigned to a respective slot on the cellbus, in all twelve flow control time slots. The card that is inserted into each given slot has the exclusive right to transmit onto its assigned bit position in the upstream cellbus during all of the twelve flow control time slots. A card on a slot can support up to twelve devices receiving downstream cells, and in the embodiment described herein, these devices are individual ports provided by the line cards inserted into the slots. Thus, if a line card 314 desires to assert backpressure for one of its ports, it does so by transmitting a backpressure signal onto the upstream cellbus conductor which is assigned to the given line card, during the specific flow control time slot designated for that port number. As used herein, a "device" can include one or more sub-devices, which are also referred to herein as devices. Thus a line unit, for example, can be thought of as a "device", as can each of the ports on the line unit.

Bus arbitration is accomplished through the use of the request/grant bits in byte number 6 of the cellbus frame as illustrated in Fig. 7. In upstream cells, this byte carries bus access request bits from the line units to the active BMU. In downstream cells, this byte carries bus grant bits from the BMU to the individual line units 314. As with the flow control bytes 55-66, each bit of the request/grant bits is assigned to a respective one of the line units 314. In the present embodiment the bit assignment is the same as that used for the flow control bytes 55-66, but in other embodiments they could be different. Similarly, the bit assignments used for the request bits in upstream cells are in the present embodiment the same as the assignments used for the grant bits in downstream cells, but in other embodiments they can be different. During the upstream time slot for the request/grant byte number 6 in every upstream cellbus frame, only the line unit 314 which is assigned to a particular one ofthe bits is permitted to transmit onto the corresponding cellbus conductor. Contention is thereby avoided.

When a line unit 314 desires to transmit data onto the upstream cellbus, it makes a request for access to the bus by asserting its associated bit in the time slot corresponding to byte 6 of a cellbus frame. The line unit 314 can expect a grant signal from the cellbus master, located on the BMU 310 or 312, in byte 6 of a subsequent downstream cellbus frame. When a grant occurs, the selected line unit must drive the upstream cellbus during the next upstream cell.

Importantly, both in the case of the flow control bytes and in the case of the request/grant byte 6, each line unit 314 has exclusive control of its own assigned bit of the upstream cellbus, even in cells to which it has not been granted control for general data transmission. As a corollary, if a given line unit is granted control of the upstream cellbus for a given upstream cellbus frame, that line unit must nevertheless refrain from transmitting onto the upstream cellbus, except for its own assigned bit, during the time slots allocated for the bus request byte number 6 and the flow control bytes numbers 55-66. The term "time slot" as used herein does not require a correlation to any other time unit in the system. It need not, for example, correspond to a bit time or a clock period. In the embodiments described herein, however, a time slot corresponds to a single bit time on the cellbus.

As previously mentioned, downstream cellbus frames carry addressing information so that individual line units 314 know which cells they should pick up, and which port within the line unit should receive the cell. This information is present in byte number 5 of the cellbus ATM frame as shown in Fig. 7. As illustrated, byte 5 contains a routing tag for the slot number and a routing tag for the port number of the destination line unit and port. The active BMU 310 or 312 inserts these routing tags in downstream cells. The BMU's 310 and 312 are previously provisioned with a mapping of VPI to slot number and port number on cards in the BRX 132. Such provisioning is performed ultimately by a Litespan common control unit 118 (Fig. 1).

### BRX Software Architecture

The BRX 132 is a slave device to a Litespan terminal. Most of its function is to transfer data and control messages between the LU's 314 and the Litespan terminal. The BRX, as a unit, is controlled by the BMU board(s). In a redundant configuration, one BMU is active while the other BMU remains in a standby state.

The BMU software performs the following functions:
- Initialization of the BMU board after a power up or reset, which includes:
   ○ Booting from FLASH memory in 314
   ○ BMU code download from CC 118
   ○ Enabling either the onboard OC3 feeder port or an HDLU feeder in an HDLU LU
   ○ Activation of the AAL_D function in QUIC 320
   ○ SONET overhead patterns for Protection Switching
- Configuration learning, which includes:
   ○ Detection of LU's in the any LU slots
   ○ Updating the BMU configuration database
- LU download, which includes:
   ○ Setting up of a LU download datalink
   ○ Managing the transfer of code from the CC 118 to the LU 314
   ○ Tear down of the LU download datalink after code transfer is completed
- Provisioning of cross connections
- Setting the TDM cross connections between the network slot (DS0) and the subscriber slot (DS0)
- Routing of ATM cells to the proper LU (a fixed routing based on the ATM cell header)
- ATM/SONET Provisioning
- VPI mapping: Number of bits allocated for LU Slot, LU Port, and User VPI bits
- Total allocated upstream bandwidth (for Pacer function)
- Bandwidth allocation per LU for the weighted round robin algorithm
- BER threshold for PSW (Protection Switching)
- Revertive or irrevertive PSW
- SONET/ATM link handling (for optical feed), which includes:
   ○ Collection of PM data (SONET BER, ATM CLR)
   ○ SONET protection switching function

The following sequence of events occurs after the powering up or resetting of the BRX 132.
- Bootcode executes from FLASH, the board runs some basic diagnostic functions, sets up the hardware, downloads a BMU image from the subtending Litespan terminal 114, checks the new image CRC, and transfers control to the new image residing in memory.
- The LU Detector scans all the universal slots in the BRX 132 and determines which slots are populated. Proper configuration entries are added in the BRX LU Configuration Table and the BRX equipage information is sent to the Litespan CC 118.
- The BMU manager cycles through the LU's 314, where the following sequence takes place:
   (a) The BMU manager allows the LU 314 to send a message upstream.
   (b) The LU 314 sends a STATUS message upstream indicating that it needs a new image.
   (c) The BMU Manager forwards the message to the Litespan terminal 114 after reflecting the LU status in the LU configuration table.
   (d) The Litespan requests the BMU to set up a temporary datalink to the requesting LU 314.
   (e) The BMU manager instructs the LU download handler to set up a datalink.
   (f) The Litespan terminal transmits the LU image which flows through the newly established datalink.
   (g) When the LU 314 verifies that it has received a complete image, it sends another STATUS message requesting its configuration data.
   (h) The BMU Manager updates the LU configuration table and instructs the LU download handler to tear down the LU download datalink. It then forwards the STATUS message to the Litespan terminal.
   (i) The Litespan terminal 114 sends configuration messages to the LU through the normal message datalink.
   (j) The LU indicates the end of its boot and configuration process by sending a final STATUS message.
- The BMU proceeds to request its provisioned cross connect information
- The Litespan terminal provisions the BMU with the DS0 cross connect map (SBI, slot) ---> (SBI, slot).

The BRX 132 cellbus will now be described in more detail.

**Routing Tags.** Each cellbus slave in the BRX 132 is assigned a unique Slot ID. Since up to eight slaves are supported, valid Slot IDs are from 0 to 7. The slot IDs are provisioned by software from Common Control 118, but due to the implementation of the upstream cellbus logic within the BMU's QUIC FPGA 320 (Fig. 4), there are hardware imposed constraints on the assignment of slot IDs to BRX physical slot numbers. These constraints are shown in Table I.

| Table I: Valid Cellbus Slot IDs | |
|---|---|
| **BRX PHYSICAL SLOT NUMBER** | **VALID CELLBUS SLOT IDs** |
| 1 | 0, 1, 4, and 5 |
| 2 | 0, 1, 4, and 5 |
| 3 | 2, 3, 6, and 7 |
| 4 | 2, 3, 6, and 7 |
| 5 | 0, 1, 4, and 5 |
| 6 | 0, 1, 4, and 5 |
| 7 | 2, 3, 6, and 7 |
| 8 | 2, 3, 6, and 7 |

For simplicity, a one-to-one Slot ID to Physical slot number assignment may be established. Note that in an embodiment, slot IDs are not assigned by software, but rather are permanently assigned by physical slot number. In other words, whatever card is inserted into physical slot X is always considered to have cellbus slot ID X-1.

Each cellbus slave may support up to four individual ports, so a Port ID is also assigned. Valid port IDs are from 0 to 3.

BRX 132 broadband slot and port addressing is achieved by translating certain bits of the ATM cell header's Virtual Path Identifier (VPI) field to the Cellbus Routing Tag byte No. 5 (Fig. 7). As previously explained, the BMU's VPI to Routing Tag mapping is software provisionable via the QUIC FPGA's Cellbus Routing and Cellbus Offset Routing registers. In an example embodiment assuming UNI and the Four Port QOLU, the ATM cell header's VPI(5-3) is defined as SLOT(2-0) and VPI(2-1) is defined as PORT(1-0).

In the downstream direction, the BMU maps the 3-bit SLOT field directly into the three least significant Slot bits of the Cellbus Destination Routing Tag byte No. 5 (DRT) and maps the 2-bit PORT field directly into the two least significant Port bits of the DRT. The corresponding VPI bits in the Cellbus header are cleared to zero.

In the upstream direction, the three least significant Slot bits of the Cellbus Source Routing Tag byte No.5 (SRT) are mapped to the corresponding ATM cell header's SLOT bits (VPI(5-3)) and the two least significant Port bits of the SRT are mapped to the cell header's PORT bits (VPI(2-1)). The corresponding VPI bits in the Cellbus header are ignored.

**Upstream Arbitration.** Each of the eight physical line unit slots is assigned, by slot ID, one request bit in the Upstream Request byte of the upstream cellbus frame and one grant bit in the Upstream Grant byte of the downstream cellbus frame. As previously discussed with respect to Fig. 7, both bytes appear as Byte No. 6 in their respective cellbus frames.

When a line unit requires the upstream path, it asserts its request bit in the Request byte and waits for the request to be acknowledged via its grant bit in the Grant byte. Upon receiving the grant, the line unit drives the cellbus on the following upstream cell frame for one frame.

The BMU's upstream arbiter grants ATM cellbus requests in a round robin fashion. However, TDM cells are given the highest priority: TDM cells are scheduled at specific cell times with reference to the upstream SONET frame and are never denied access to the upstream path toward the Litespan terminal 114. A requesting line unit requests the bus until a grant is received.

In this embodiment, a line unit 314 is granted ownership of the cellbus for data transmission for only one cellbus frame at a time, and must arbitrate (assert another request signal) if already has additional data to transmit. The line unit 314 may assert the next request signal even in the current cellbus frame; it does not need to wait until it no longer controls the cellbus to do so. In other embodiments, line units can have ownership of the cellbus for more than one cellbus frame at a time, and the number of frames of consecutive ownership can be fixed or variable in different embodiments. As used herein, all of these variations are intended to be covered when it is said that devices have control of the bus for data transmission "in accordance with" regular time frames.

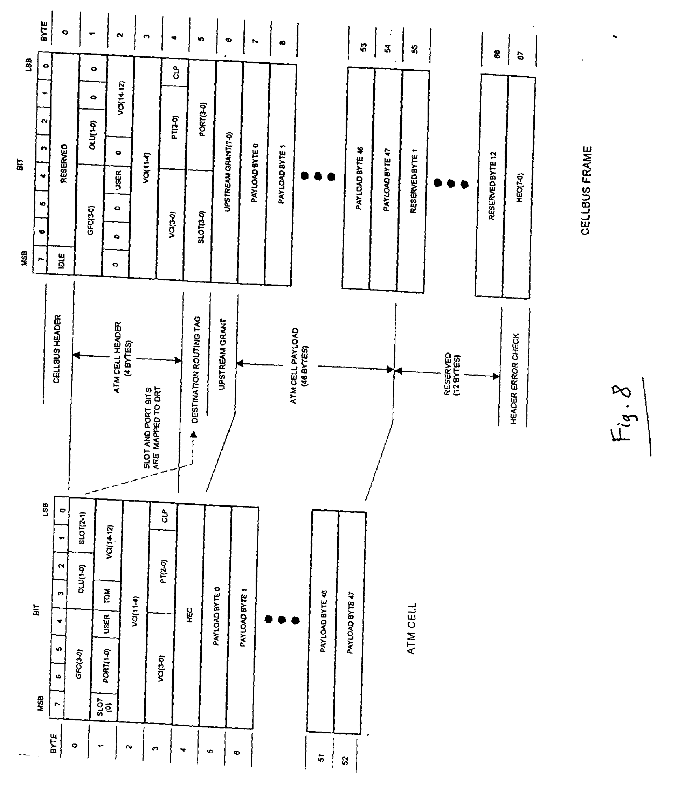

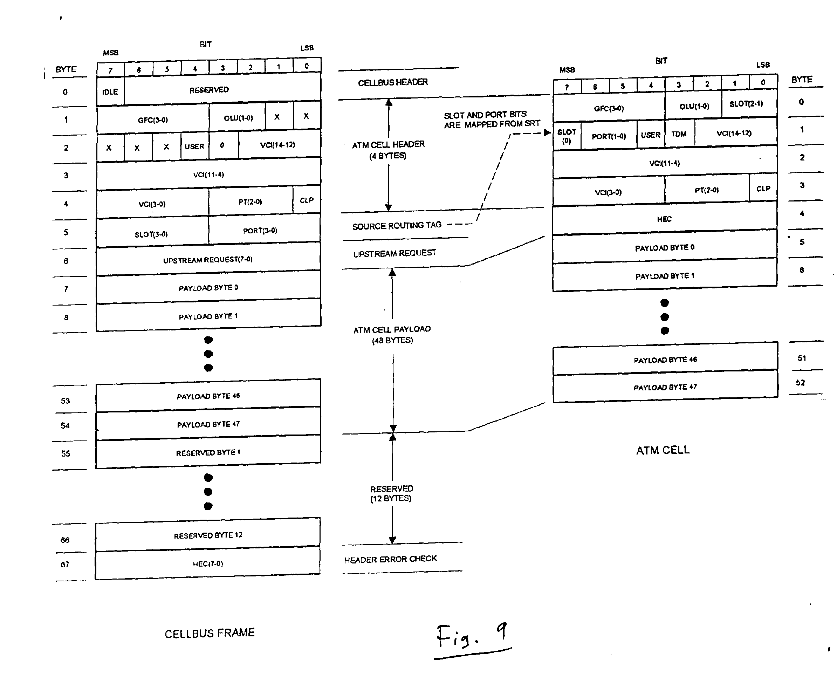

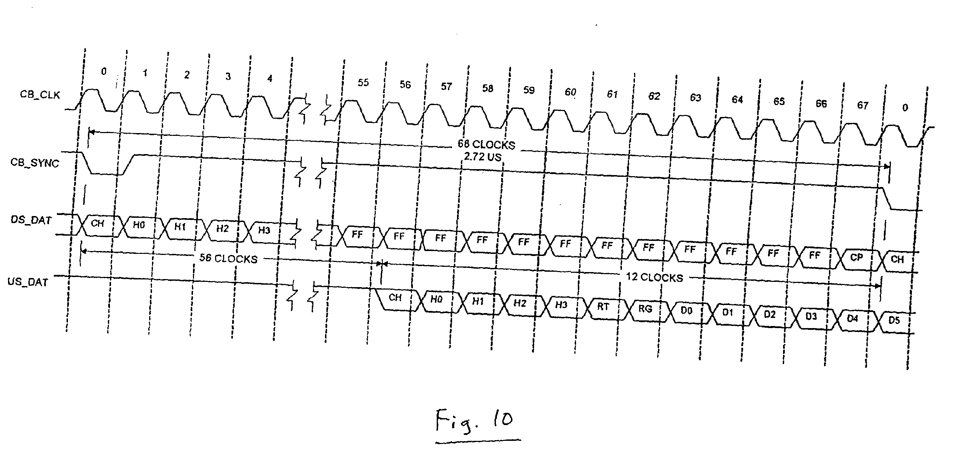

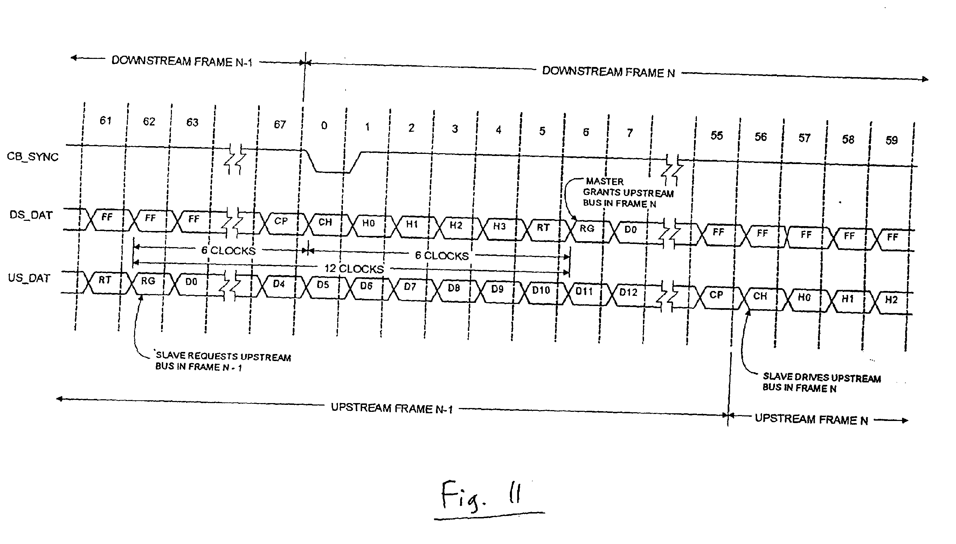

**Data Format.** Fig. 8 illustrates the downstream Cellbus data format and its relation to the standard ATM cell format. Fig. 9 illustrates the upstream Cellbus data format and its relation to the standard ATM cell format. Pertinent ones of the various Cellbus fields are described in the following subsections.

**Cellbus Header.** Table II defines the Cellbus Header.

**Table II**

| **DATA BIT** | **NAME** | **DESCRIPTION** |
|---|---|---|
| 7 | IDLE | Cellbus Idle. When IDLE = 0, the current cellbus frame is valid. When IDLE = 1, the current cellbus frame is invalid (idle). |
| 6-0 | Reserved | Reserved Bits. These reserved bits should either be driven high or not driven (since they are pulled-up). |

**ATM Cell Header.** The BMU uses the cell header's Virtual Path Identifier (VPI) field to route ATM cells to/from the BRX's broadband line units. The remaining fields are not used and are passed through unchanged. BRX broadband slot and port addressing is achieved by translating certain VPI bits to the Cellbus Routing Tag byte as described elsewhere herein.

The actual BRX usage of the VPI field is dependent on a number of factors, including UNI versus NNI definition (8-bit versus 12-bit VPI field) and OLU port size (single port AOLU versus four port QOLU). The BMU's VPI to Routing Tag mapping is therefore totally software provisionable via the QUIC FPGA's Cellbus Routing and Cellbus Offset Routing registers.

The Header fields are defined as follows:
**GFC(3-0):** Generic Flow Control. Not used by the BMU and passed through.
**OLU(1-0):** OLU Port. Not used by the BMU and passed through.
**SLOT(2-0):** Line Unit Slot. This 3-bit field specifies the addressed Line Unit slot in the BRX, slot 0 through 7. In the upstream direction, these bits are mapped directly from the three least significant bits of the Cellbus Source Routing Tag, Slot bits (and the corresponding VPI bits in the Cellbus header are ignored). In the downstream direction, these bits are mapped directly into the three least significant bits of the Cellbus Destination Routing Tag, Slot bits (and the corresponding VPI bits in the Cellbus header are cleared to zero).
**PORT(1-0):** Line Unit Port. This 2-bit field specifies the addressed Line Unit's port, 0 through 3. In the upstream direction, these bits are mapped directly from the two least significant bits of the Cellbus Source Routing Tag, Port bits (and the corresponding VPI bits in the Cellbus header are ignored). In the downstream direction, these bits are mapped directly into the two least significant bits of the Cellbus Destination Routing Tag, Port bits (and the corresponding VPI bits in the Cellbus header are cleared to zero).
**USER:** User VPI bit. Not used by the BMU and passed through.
**VCI(15):** Virtual Channel Identifier, most significant bit. When the AAL-D TDM function is enabled (via the QUIC FPGA's Control register), this bit differentiates between ATM and TDM cells: 0 = ATM cell, 1 = TDM cell. When the AAL-D TDM function is disabled, this bit is not used by the BMU and passed through.
**VCI(14-0):** Virtual Channel Identifier. Not used by the BMU and passed through.
**PT(2-0):** Payload Type. Not used by the BMU and passed through.
**CLP:** Cell Loss Priority. Not used by the BMU and passed through.
**HEC(7-0):** Header Error Control. This 8-bit field is a CRC-8 calculation over the first 4 octets of the cell header.

**Destination Routing Tag.** The Destination Routing Tag (DRT) is defined in Table III.

**Table III**

| **DATA BIT** | **NAME** | **DESCRIPTION** |
|---|---|---|
| 7-4 | SLOT(3-0) | 4-bit Destination Slot ID. These bits identify the destination slot of the downstream cell. In the BRX 132, up to eight slots may be addressed. The Three LSBs of the slot field are |
| | | mapped from the ATM cell's VPI field (VPI5-3 in this example). The MSB is set low. Valid Slot IDs are 0 thru 7. |
| 3-0 | PORT(3-0) | 4-bit Destination Port ID. These bits identify the destination port of the downstream cell. In the BRX 132, up to four ports may be addressed. The Two LSBs of the port field are mapped from the ATM cell's VPI field (VPI2-1 in this example). The two MSBs are set low. Valid Port IDs are 0 thru 3. |

**Source Routing Tag.** The Source Routing Tag (SRT) is defined in Table IV.

**Table IV**

| **DATA BIT** | **NAME** | **DESCRIPTION** |
|---|---|---|
| 7-4 | SLOT(3-0) | 4-bit Source Slot ID. These bits identify the source slot of the upstream cell. In the BRX 132, up to eight slots may be addressed. The Three LSBs of the slot field are mapped into the ATM cell's VPI field (VPI5-3 in this example). Valid Slot IDs are 0 thru 7. |
| 3-0 | PORT(3-0) | 4-bit Source Port ID. These bits identify the source port of the upstream cell. In the BRX 132, up to four ports may be addressed. The Two LSBs of the port field are mapped into the ATM cell's VPI field (VPI2-1 in this example). Valid Port IDs are 0 thru 3. |

**Upstream Request Byte.** The Upstream Request byte is defined in Table V.

**Table V**

| **DATA BIT** | **NAME** | **DESCRIPTION** |
|---|---|---|
| 7 | RQST7 | Slot ID 7 Upstream Request. RQST7 = 0, the slave with slot ID 7 is requesting to send an upstream cell. RQST7= 1, no request. The slave should keep the request asserted until a grant is received. |
| 6 | RQST6 | Slot ID 6 Upstream Request. See RQST7 description. |
| 5 | RQST3 | Slot ID 3 Upstream Request. See RQST7 description. |
| 4 | RQST2 | Slot ID 2 Upstream Request. See RQST7 description. |
| 3 | RQST5 | Slot ID 5 Upstream Request. See RQST7 description. |
| 2 | RQST4 | Slot ID 4 Upstream Request. See RQST7 description. |
| 1 | RQST1 | Slot ID 1 Upstream Request. See RQST7 description. |
| 0 | RQST0 | Slot ID 0 Upstream Request. See RQST7 description. |

**Upstream Grant Byte.** The Upstream Grant byte is defined in Table VI.

**Table VI**

| **DATA BIT** | **NAME** | **DESCRIPTION** |
|---|---|---|
| 7 | GRNT7 | Slot ID 7 Upstream Grant. GRNT7 = 0, the slave with slot ID 7 has been given access to the upstream cellbus. The slave must drive the upstream bus in the cell frame immediately following the grant. Only one grant is asserted per cell frame. GNT7 = 1, no grant. |
| 6 | GRNT6 | Slot ID 6 Upstream Request. See GRNT7 description. |
| 5 | GRNT3 | Slot ID 3 Upstream Request. See GRNT7 description. |
| 4 | GRNT2 | Slot ID 2 Upstream Request. See GRNT7 description. |
| 3 | GRNT5 | Slot ID 5 Upstream Request. See GRNT7 description. |
| 2 | GRNT4 | Slot ID 4 Upstream Request. See GRNT7 description. |
| 1 | GRNT1 | Slot ID 1 Upstream Request. See GRNT7 description. |
| 0 | GRNT0 | Slot ID 0 Upstream Request. See GRNT7 description. |

**ATM Cell Payload.** The 48 ATM cell payload bytes are inserted/extracted directly from the ATM cell payload.

**Header Error Check.** The Header Error Check byte is a CRC-8 polynomial (X⁸ + X² + X + 1) with COSET polynomial (X⁶ + X⁴ + X² + 1) addition that is calculated over Cellbus bytes 0 thru 5.

**BRX 132 Physical Configuration.** The BMU supports one common, shared cellbus with up to eight slave line units. The BRX backplane, however, has four separate cellbuses, with each bus shared between two line unit slots. These buses are defined at the backplane as follows: Bus A, shared between physical slots 1 and 2; Bus B, shared between physical slots 3 and 4; Bus C, shared between physical slots 5 and 6; and Bus D, shared between physical slots 7 and 8.

In the downstream direction, the BMU "fans out" its common cellbus signals (clock, sync and 8-bit data) to the A, B, C and D buses. In the upstream direction, the 8-bit upstream data is combined as follows: the A and C buses and the B and D buses are wire-AND'ed (connected together) on the BMU, and the resulting two buses are input to the QUIC FPGA. The QUIC selects the active bus depending on which bus, A_C or B_D, was granted access by its arbiter. This implementation is the cause of the slot ID to physical slot number constraints mentioned above.

**Interface Signals.** The Cellbus Interface (CBI) signals are set forth in Table VII. Note that the Cellbus uses a hybrid GTL specification in which the open collector GTL driver is terminated per the GTL+ specification (1.5 V), while the receiver threshold is set per the GTL specification (0.8 V).

**Table VII:**

| Cellbus Interface Signals | | | |
|---|---|---|---|
| **SIGNAL NAME** | **I/O** | **SIGNA L LEVEL** | **DESCRIPTION** |
| CBA_CLK25M | OC, T | GTL+ | **Cellbus A 25Mhz Clock.** This output provides the upstream and downstream clock reference to physical slots 1 and 2. Pulled-up on the backplane. |
| CBA_SYNC_N | OC, T | GTL+ | **Cellbus A Sync.** This output provides the upstream and downstream 2.72 ms frame synchronization to physical slots 1 and 2. Active low. Pulled-up on the backplane. |
| CB_A_DSDAT(7: 0) | OC, T | GTL+ | **Cellbus A Downstream Data** Bus. This 8-bit bus provides the downstream cellbus data to physical slots 1 and 2. Pulled-up on the backplane. |
| CB_AC_USDAT( 7:0) | I | GTL | **Cellbus A and C Upstream Data Bus.** This 8-bit bus provides the upstream cellbus data from physical slots 1, 2, 5 and 6. Pulled-up on the backplane. |
| CBB_CLK25M | OC, T | GTL+ | **Cellbus B 25Mhz Clock.** This output provides the upstream and downstream clock reference to physical slots 3 and 4. Pulled-up on the backplane. |
| CBB_SYNC_N | OC, T | GTL+ | **Cellbus B Sync.** This output provides the upstream and downstream 2.72 ms frame synchronization to physical slots 3 and 4. Active low. Pulled-up on the backplane. |
| CB_B_DSDAT(7: 0) | OC, T | GTL+ | **Cellbus B Downstream Data Bus**. This 8-bit bus provides the downstream cellbus data to physical slots 3 and 4. Pulled-up on the backplane. |
| CB_BD_USDAT( 7:0) | I | GTL | **Cellbus B and D Upstream Data** Bus. This 8-bit bus provides the upstream cellbus data from physical slots 3, 4, 7 and 8. Pulled-up on the backplane. |
| CBC_CLK25M | OC, T | GTL+ | **Cellbus C 25Mhz** Clock. This output provides the upstream and downstream clock reference to physical slots 5 and 6. Pulled-up on the backplane. |
| CBC_SYNC_N | OC, T | GTL+ | **Cellbus C Sync.** This output provides the upstream and downstream 2.72 ms frame synchronization to physical slots 5 and 6. Active low. Pulled-up on the backplane. |
| CB_C_DSDAT(7: 0) | OC, T | GTL+ | **Cellbus C Downstream Data Bus.** This 8-bit bus provides the downstream cellbus data to physical slots 5 and 6. Pulled-up on the backplane. |
| CBD_CLK25M | OC, T | GTL+ | **Cellbus D 25Mhz Clock.** This output provides the upstream and downstream clock reference to physical slots 7 and 8. Pulled-up on the backplane. |
| CBD_SYNC_N | OC, T | GTL+ | **Cellbus D Sync.** This output provides the upstream and downstream 2.72 ms frame synchronization to physical slots 7 and 8. Active low. Pulled-up on the backplane. |
| CB_D_DSDAT(7: 0) | OC, T | GTL+ | **Cellbus D Downstream Data Bus.** This 8-bit bus provides the downstream cellbus data to physical slots 7 and 8. Pulled-up on the backplane. |

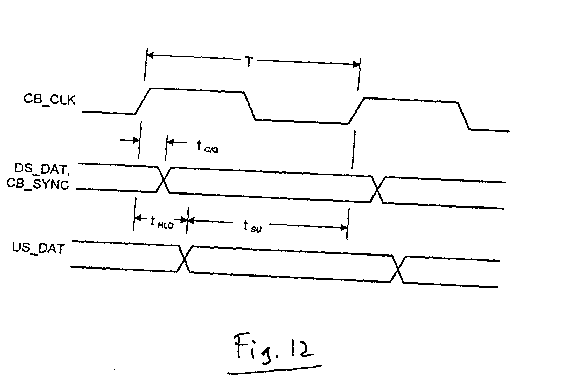

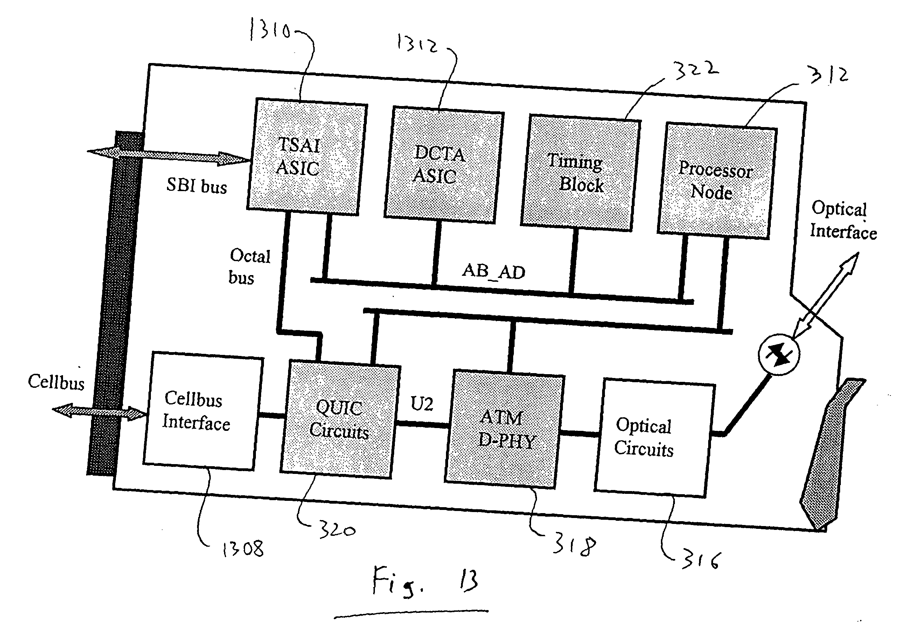

**Interface Timing and Clock Generation.** In order to be sure that all the line units 314 transmit only during the signaling time slots described above, signal timing on the cellbus backplane in the BRX 132 is very important. The Cellbus functional timing is shown in Fig. 10. Fig. 11 illustrates upstream request/grant arbitration. The following codes are used to annotate the upstream and downstream data bytes:
- CH: Cellbus Header byte
- H[0:3]: ATM Header bytes
- RT: Upstream: Source Routing Tag byte; Downstream: Destination Routing Tag byte
- RG: Upstream: Request bits; Downstream: Grant bits
- D[0:47]: ATM Payload bytes
- FF: Reserved bytes
- CP: HEC byte

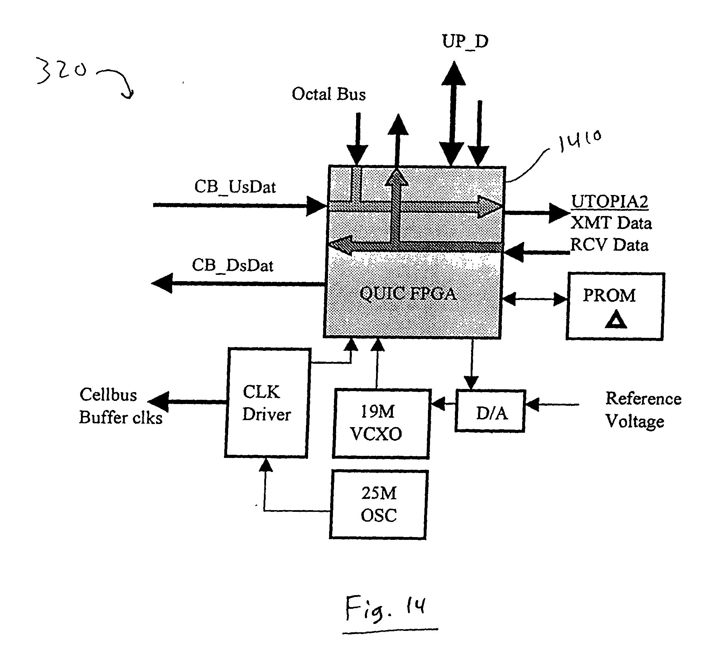

The BMU cellbus detailed input timing and output switching characteristics are given in Fig. 12, Table VIII, and Table IX. Note that all timing is referenced at the BMU backplane connector (trace delays are not taken into account), and that the numbers given are the absolute worst case over the allowable voltage and temperature ranges. The cellbus interface operates via a totally asynchronous 25 MHZ oscillator.

**Table VIII**

| **Symbol** | **Description** | **From** | **To** | **Min** | **Max** | **Units** |
|---|---|---|---|---|---|---|
| T | Cellbus Clock Period | CB_CLK ↑ | CB_CLK ↑ | 39.7 | 40.3 | ns |
| t_{CK/Q} | Cellbus Clock to Downstream Data | CB_CLK ↑ | DS_DAT, CB_SYNC | 2.9 | 14.4 | ns |

**Table IX**

| **Symbol** | **Description** | **From** | **To** | **Min** | **Max** | **Units** |
|---|---|---|---|---|---|---|
| t_{SU} | Cellbus Upstream | US_DAT | CB_CLK ↑ | 1.3 | - | ns |
| | Data Setup to Clock | | | | | |
| t_{HLD} | Cellbus Upstream Data Hold from Clock | CB_CLK 1 | US_DAT | 9.2 | - | ns |

### BMU Functional Description

The functional blocks of a BMU 132 are described with respect to Fig. 4. Another view is illustrated in Fig. 13. As can be seen from the figure, the BMU includes the following functional blocks: Optics Front End 316, ATM UNI Physical Layer Device (PHY) 318, Quad Interface Controller (QUIC) FPGA 320, Cellbus Interface 1308, Processor Node 312, Timing Block 322, Timeslot Assignor ASIC (TSAI) 1310, and the Datalink and Tone Controller ASIC (DCTA) 1312. Only pertinent ones of these functional blocks are described herein in detail.

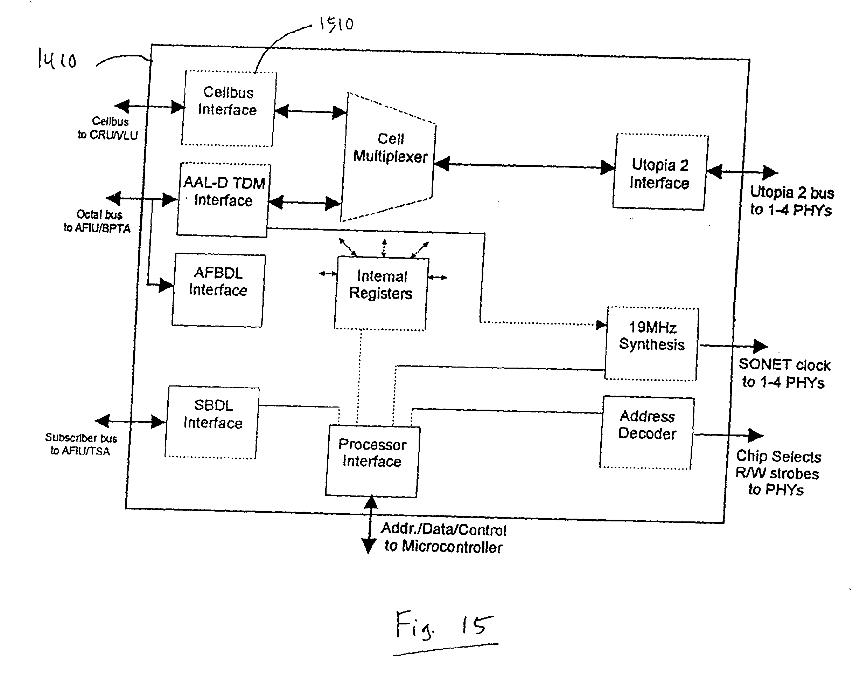

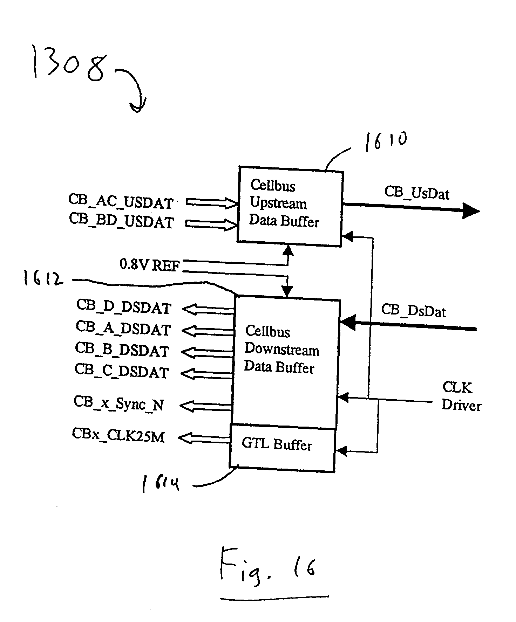

**The QUIC Circuits.** Fig. 14 is a block diagram detail of QUIC Circuits 320 in Fig. 13. The QUIC FPGA 1410 in Fig. 14 is further detailed in Fig. 15. The primary function of the QUIC (Quad Interface Controller) design is to transport full-duplex Octal bus and Cellbus data over a SONET facility. The QUIC ASIC performs the AAL-D multiplexer, or TDM over ATM, function for broadband line units 314. In addition it may transport either HDT or ONU Cellbus traffic over the UTOPIA bus and perform various glue functions. The design supports a number of interfaces for data transport and data links for QUIC control.

The major QUIC functions applicable to the BMU are listed below.
- Processor Interface: Interface to a 32-bit 68331 microcontroller
- Utopia 2 Interface: Interface to a UTOPIA PHY port at ECR-3
- Cellbus Interface: Support a multi-drop ECR-3 Cellbus interface to Broadband Line Units
- AAL-D TDM Interface: Transport Octal bus over ATM UTOPIA interface
- Provide serial pulse accumulator output for received TDM cells
- Synthesize 19.44MHz PHY clock phase locked to Octal bus sync
- Provide 8KHz frame BMU sync outputs.
- Provide 1KHz superframe BMU sync outputs.

**Cellbus Interface.** The Cellbus interface function 1308 supports the BRX Cellbus, between the BMU and the broadband units 314 in the BRX 132. The Cellbus interface function transports ATM cell traffic over the full-duplex eight bit wide parallel paths, both downstream and upstream.

In the BRX 132, the QUIC 320 is the Cellbus master. Cellbus frame sync and Cellbus clock are transported over discrete paths. Data and sync are transported over registered GTL backplane transceivers. Cellbus clock is GTL on the backplane.

The upstream Cellbus arbiter is implemented in the QUIC's CB_IF Cellbus interface 1510. Both eight bit Cellbuses drive the sixteen bit QUIC X_CB_RDAT receive data bus. TDM cells have the highest priority. TDM cells are scheduled at specific cell times with reference to the upstream SONET frame and are never denied access to the upstream Utopia bus. The remaining bandwidth is arbitrated between requesting LUs in a round robin fashion.

Idle bits are transported in both upstream and downstream Cellbuses to identify idle Cellbus cells.

Fig. 16 is a block diagram detail of the Cellbus Interface 1510. It includes cellbus upstream and downstream data buffers 1610 and 1612, respectively, and a GTL buffer 1614 for driving the cellbus 25MHz clock. Cellbus signals are terminated at the GTL+ specification of 1.5 Volts. However the GTL receiver threshold is set to the GTL specification of 0.8 Volts.

The Cellbus of two BRX Line Units are routed together on the backplane, then two of these buses are combined on the BMU so that four cards 314 share a Cellbus. Cellbus frame sync and Cellbus clock are transported over discrete paths. Data and sync are transported over registered GTL backplane transceivers. The BMU local cell rate is synthesized from the 25MHz system Cellbus clock. This master Cellbus clock is generated on the BMU and distributed to the line units at GTL levels.

To implement the BMU redundancy on the BRX system, the Control and Timing (CAT) FPGA circuits control the Downstream Cellbus data buffer. The Downstream buffer can either be active with the control being low or be in the high-impedance state with the control being high. The Upstream Cellbus buffer is always active on the BMU.

**Timing Block.** The Timing Block (TB) 322 recovers timing from the BMU Board and provides timing (directly or indirectly) for the rest of the BRX 132.

As used herein, a "time frame" can include one or more sub-frames, or frame segments, each of which is also considered herein to be a "time frame". A plurality of contiguous "time frames" can also be grouped together and thought of as a "superframe", but such a superframe is also considered herein to be a "time frame."

Also as used herein, a given signal or event is "responsive" to a predecessor signal or event if the predecessor signal or event influenced the given signal or event. If there is an intervening processing element, step or time period, the given signal or event can still be "responsive" to the predecessor signal or event. If the intervening processing element or step combines more than one signal or event, the signal output of the processing element or step is considered "responsive" to *each* of the signal or event inputs. If the given signal or event is the same as the predecessor signal or event, this is merely a degenerate case in which the given signal or event is still considered to be "responsive" to the predecessor signal or event.

The foregoing description of preferred embodiments of the present invention has been provided for the purposes of illustration and description. It is not intended to be exhaustive or to limit the invention to the precise forms disclosed. Obviously, many modifications and variations will be apparent to practitioners skilled in this art. For example, the signaling techniques described herein can be used with optical or other kinds of bus conductors, not merely electrical. In addition, and without limitation, any and all variations described, suggested or incorporated by reference in the Background section of this patent application are specifically incorporated by reference into the description herein of embodiments of the invention. The embodiments described herein were chosen and described in order to best explain the principles ofthe invention and its practical application, thereby enabling others skilled in the art to understand the invention for various embodiments and with various modifications as are suited to the particular use contemplated. It is intended that the scope of the invention be defined by the following claims and their equivalents.

## Claims

1. A bus signaling method, for use with a bus having a first plurality of conductors shared among a plurality of devices, comprising the steps of:
allocating control of said shared conductors for data transmission to individual ones of said devices in accordance with regular time frames; and
associating with each of said devices a corresponding signaling subset of said first plurality of conductors and a corresponding signaling time slot occurring within each of said time frames,
wherein during each given one of said signaling time slots only a device associated with said given signaling time slot and a given one of said signaling subsets of conductors is permitted to transmit onto said signaling subset of conductors.

2. A method according to claim 1, wherein said bus comprises a backplane and each of said devices comprises a respective card inserted into said backplane.

3. A method according to claim 2, wherein said step of associating with each of said devices a corresponding signaling subset of said first plurality of conductors comprises the step of associating with each of said devices a respective single one of said first plurality of conductors.

4. A method according to claim 1, wherein said step of associating with each of said devices a corresponding signaling time slot comprises the step of associating with all of said devices a single common time slot occurring within each of said time frames.

5. A method according to claim 4, wherein said step of associating further comprises the step of associating with each of said devices a respective single one of said first plurality of conductors.

6. A method according to claim 5, wherein said bus comprises a backplane having slots for a plurality of cards, each of said cards having a respective first sub-device,
and wherein each given one of said devices comprises the first sub-device on a respective given one of said cards.

7. A method according to claim 6, wherein each of said cards further has a second sub-device,
wherein said step of associating with each of said devices a respective single one of said first plurality of conductors comprises the step of associating a respective single one of said first plurality of conductors with both the first and second sub-devices on each of said cards,
further comprising the step of associating with all of said second sub-devices a second common time slot occurring within each of said time frames.

8. A method according to claim 1, wherein said step of associating with each of said devices a corresponding signaling subset of said first plurality of conductors and a corresponding signaling time slot occurring within each of said time frames, comprises the steps of:
associating a single common signaling subset of said conductors with all of said devices; and
associating with each of said devices a respective different signaling time slot occurring within each of said time frames.

9. A method according to claim 7, wherein said bus comprises a backplane having slots for a plurality of cards,
and wherein all of said devices comprise respective different sub-devices on a single one of said cards.

10. A method according to claim 1, wherein said step of allocating control of said shared conductors for data transmission to individual ones of said devices in accordance with regular time frames, comprises the step of allocating said control individually for each of said regular time frames.

11. A method according to claim 1, wherein said step of allocating control of said shared conductors for data transmission to individual ones of said devices in accordance with regular time frames, comprises the step of granting control of said shared conductors for at least an upcoming one of said regular time frames in response to a request asserted by one of said devices.

12. A method according to claim 1, further comprising the steps of:
a first one of said devices signaling a bus request on a signaling subset of conductors associated with the first device and during a signaling time slot associated with the first device; and
in response to said step of said first device signaling a bus request, allocating control of said shared conductors to said first device for data transmission.

13. A method according to claim 1, further comprising the step of transmitting data to said devices over a second plurality of conductors distinct from said first plurality of conductors.

14. A method according to claim 13, further comprising the steps of:
a first one of said devices signaling backpressure information on a signaling subset of conductors associated with the first device and during a signaling time slot associated with the first device; and
transmitting data to said first device via said second plurality of conductors in dependence upon said backpressure information.

15. Apparatus comprising:
a bus having a first plurality of conductors;
a plurality of devices sharing said first plurality of conductors, each of said devices being allocated individual control of said shared conductors for data transmission in accordance with regular time frames, and each of said devices further having associated therewith a corresponding signaling subset of said first plurality of conductors and a corresponding signaling time slot occurring within each of said time frames,
wherein during each given one of said signaling time slots in all of said time frames, only a device associated with said given signaling time slot and a given one of said signaling subsets of conductors is permitted to transmit onto said signaling subset of conductors.

16. Apparatus according to claim 15, wherein said bus comprises a backplane and each of said devices comprises a respective card inserted into said backplane.

17. Apparatus according to claim 16, wherein each of said signaling subsets of conductors consists of a respective single conductor.

18. Apparatus according to claim 15, wherein all of said devices share a common one of said signaling time slots occurring within each of said time frames.

19. Apparatus according to claim 18, wherein all of said signaling subsets of conductors are distinct.

20. Apparatus according to claim 19, wherein said bus comprises a backplane having slots for a plurality of cards, each of said cards having a respective first sub-device,
and wherein each given one of said devices comprises the first sub-device on a respective given one of said cards.

21. Apparatus according to claim 20, wherein each of said cards further has a second sub-device,
wherein both the first and second sub-devices on each of said cards share a respective common signaling subset of conductors,
and wherein the second sub-devices on all of said cards share a second common signaling time slot occurring within each of said time frames.

22. Apparatus according to claim 15, wherein all of said devices share a common signaling subset of said conductors, and
wherein each of said devices is associated with a respective different signaling time slot occurring within each of said time frames.

23. Apparatus according to claim 21, wherein said bus comprises a backplane having slots for a plurality of cards,
and wherein all of said devices comprise respective different sub-devices on a single one of said cards.

24. Apparatus according to claim 15, further comprising a controller which allocates said individual control of said shared conductors for data transmission in accordance with regular time frames.

25. Apparatus according to claim 24, wherein said controller allocates said control individually for each of said regular time frames.

26. Apparatus according to claim 15, further comprising an arbiter which allocates said individual control of said shared conductors for data transmission in response to requests asserted by said devices.

27. Apparatus according to claim 26, wherein said requests are asserted by each given one of said devices at least in part by signaling on a signaling subset of conductors associated with the given device and during a signaling time slot associated with the given device.

28. Apparatus according to claim 15, wherein said bus further has a second plurality of conductors distinct from said first plurality of conductors,
further comprising a master which transmits data toward said devices via said second plurality of conductors.

29. Apparatus according to claim 28, wherein each given one of said devices signals backpressure information at least in part by signaling on a signaling subset of conductors associated with the given device and during a signaling time slot associated with the given device,
and wherein said master transmits data to the given device in dependence upon the backpressure information received from the given device.

30. Apparatus comprising:
a bus having a first plurality of conductors, data being transmitted on said bus in sequential time frames, each of said time frames including a bus request signaling time slot; and
a plurality of devices sharing said first plurality of conductors, each of said devices being allocated individual control of said shared conductors for data transmission in accordance with said sequential time frames, and each of said devices further having associated therewith a corresponding one of said first plurality of conductors for asserting bus requests during bus request signaling time slots,
wherein during said bus request signaling time slots only a device associated with a given one of said conductors for asserting bus requests is permitted to transmit onto the given conductor.

31. Apparatus according to claim 30, wherein said bus comprises a backplane and each of said devices comprises a respective card inserted into said backplane.

32. Apparatus according to claim 30, further comprising an arbiter which allocates said individual control of said shared conductors for data transmission in response to said bus requests.

33. Apparatus according to claim 30, wherein said bus further has a second plurality of conductors distinct from said first plurality of conductors,
further comprising a master which transmits data toward said devices via said second plurality of conductors.

34. Apparatus according to claim 33, wherein said master includes an arbiter which allocates said individual control of said shared conductors for data transmission in response to said bus requests,
wherein said data transmitted by said master toward said devices via said second plurality of conductors includes bus grant information from said arbiter.

35. Apparatus comprising:
a bus having a first plurality of conductors;
a plurality of devices sharing said first plurality of conductors, each of said devices being allocated individual control of said shared conductors for data transmission in accordance with sequential time frames, and each of said devices further having associated therewith a corresponding one of said first plurality of conductors for asserting flow control information during a first flow control signaling time slot occurring within each of said time frames,
wherein during said first flow control signaling time slots only a device associated with a given one of said conductors for asserting flow control information is permitted to transmit onto the given conductor.

36. Apparatus according to claim 35, wherein said bus comprises a backplane and each of said devices is disposed on a respective card inserted into said backplane.

37. Apparatus according to claim 35, wherein said bus comprises a backplane having slots for a plurality of cards, each of said cards having a respective first sub-device,
wherein each given one of said devices comprises the first sub-device on a respective given one of said cards.

38. Apparatus according to claim 37, wherein at least one of said cards further has a second sub-device.

39. Apparatus according to claim 38, wherein each of said time frames further includes a second flow control signaling time slot,
wherein all of the sub-devices on each particular one of said cards are associated with a respective common one of said conductors for asserting flow control information,
and wherein during said second flow control signaling time slots only the second sub-device on a card associated with a given one of said conductors for asserting flow control information is permitted to transmit onto the given conductor.

40. Apparatus according to claim 35, wherein said bus further has a second plurality of conductors distinct from said first plurality of conductors,
further comprising a master which transmits data toward said devices via said second plurality of conductors.

41. Apparatus according to claim 40, wherein said master transmits data to each given device in dependence upon the backpressure information received from the given device.

42. Apparatus comprising:
a bus having a first plurality of conductors, on which data is transmitted in sequential time frames, each of said time frames having first and second flow control signaling time slots;
a plurality of devices sharing said first plurality of conductors, each of said devices being allocated individual control of said shared conductors for data transmission in accordance with said sequential time frames, and each of said devices further having associated therewith a corresponding one of said first plurality of conductors for asserting flow control information, each of said devices having a respective first sub-device and at least a first one of said devices further having a second sub-device,
wherein during said first and second flow control signaling time slots only the device associated with a given one of said conductors for asserting flow control information transmits onto the given conductor,
wherein said first device asserts flow control information for the first sub-device during the said first flow control signaling time slots,
and wherein said first device asserts flow control information for the second sub-device on said first device during said second flow control signaling time slots.

43. Apparatus according to claim 42, wherein said bus comprises a backplane and each of said devices comprises a respective card inserted into said backplane.

44. Apparatus according to claim 42, wherein said bus further has a second plurality of conductors distinct from said first plurality of conductors,
further comprising a master which transmits data toward said devices via said second plurality of conductors.

45. Apparatus according to claim 44, wherein said master transmits data to each given device in dependence upon the backpressure information received from the given device.

46. A method for accessing shared conductors on a bus having a first plurality of shared conductors, devices having ownership of said shared conductors for data transmission in accordance with regular time frames, comprising the steps of:
a first one of said devices asserting a bus request signal on at least one of said shared conductors during a predetermined time slot allocated for bus request signaling, during a first one of said time frames in which a first device is not the owner of said shared conductors for data transmission; and
said first device transmitting data onto said shared conductors in response to said first device receiving a bus grant indication.

47. A method according to claim 46, further comprising the step of, prior to said step of asserting, said first device receiving a pre-assignment for bus request signaling of said at least one shared conductor.

48. A method according to claim 46, wherein said first device does not transmit onto said shared conductors, except during signaling time slots including said predetermined time slot, during time frames including said first time frame in which said first device is not the owner of said shared conductors for data transmission.

49. A method according to claim 46, wherein said step of said first device transmitting data onto said shared conductors in response to said first device receiving a bus grant indication, comprises the step of said first device transmitting said data onto said shared conductors for no more than one of said time frames in response to each receipt by said first device of a bus grant indication.

50. A method according to claim 46, further comprising the step of said first device receiving data via a second plurality of conductors distinct from said first plurality of shared conductors.

51. A method according to claim 50, further comprising the step of said first device receiving said bus grant indication via said second plurality of conductors.

52. A method according to claim 46, further comprising the steps of:
said first device asserting a bus request signal on said at least one of said shared conductors during the predetermined time slot during a second one of said time frames in which a first device is the owner of said shared conductors for data transmission; and
said first device transmitting data onto said shared conductors during a third one of said time frames after said second time frame in response to said first device receiving a bus grant indication.

53. Bus access apparatus for use with a bus having a first plurality of shared conductors, devices on said bus having ownership of said shared conductors for data transmission in accordance with regular time frames, comprising:
means on a first one of said devices for asserting bus request signals on at least one of said shared conductors during a predetermined time slot allocated for bus request signaling, said predetermined time slots occurring during each of said time frames; and
means on said first device for transmitting data onto said shared conductors in response to said first device receiving a bus grant indication.

54. Apparatus according to claim 53, wherein said first device, prior to asserting said bus request signals, receives a pre-assignment for bus request signaling of said at least one shared conductor.

55. Apparatus according to claim 53, wherein said bus further has a second plurality of conductors distinct from said first plurality of shared conductors,
further comprising means on said first device for receiving data via a second plurality of conductors.

56. Apparatus according to claim 55, further comprising means on said first device for receiving said bus grant indication via said second plurality of conductors.

57. An incoming flow control method for use with outgoing shared conductors on a bus having a first plurality of shared outgoing conductors, devices having ownership of said shared conductors for data transmission in accordance with regular time frames each having a respective first flow control signaling time slot, comprising the steps of:
a first one of said devices transmitting data onto said shared conductors during time frames in which said first device is the owner of said shared conductors for data transmission; and
said first device asserting flow control information onto at least one of said shared conductors during the one of said first flow control signaling time slots occurring during a first one of said time frames in which a first device is not the owner of said shared conductors for data transmission.

58. A method according to claim 57, wherein said bus comprises a backplane and said first device is disposed on a first card inserted into said backplane.

59. A method according to claim 58, wherein said first card further includes a second one of said devices.

60. A method according to claim 59, wherein each of said regular time frames further has a respective second flow control signaling time slot,
further comprising the step of said second device asserting flow control information onto said at least one shared conductor during the one of said second flow control signaling time slots occurring during a second one of said time frames in which said second device is not the owner of said shared conductors for data transmission.

61. A method according to claim 57, further comprising the step of said first device asserting flow control information onto said at least one shared conductor during the one of said first flow control signaling time slots occurring during one of said time frames in which said first device is the owner of said shared conductors for data transmission.

62. A device for use with a bus having a first plurality of shared conductors, devices on said bus having ownership of said shared conductors for data transmission in accordance with regular time frames each having a respective first flow control signaling time slot, comprising:
means for transmitting data onto said shared conductors during time frames in which said device is the owner of said shared conductors for data transmission; and
means for asserting flow control information onto at least one of said shared conductors during said first flow control signaling time slots whether or not they occur during ones of said time frames in which said device is the owner of said shared conductors for data transmission.

63. A device according to claim 62, further comprising a first port which receives incoming data, said means for asserting flow control information during said first flow control signaling time slots being responsive to said first port.

64. A device according to claim 63, wherein each of said regular time frames further has a respective second flow control signaling time slot, further comprising:
a second port which receives incoming data; and
means for asserting flow control information onto said at least one shared conductor during said second flow control signaling time slots in response to said second port, whether or not said second flow control signaling time slots occur during ones of said time frames in which said device is the owner of said shared conductors for data transmission.
